# EUROPÄISCHE PATENTANMELDUNG

(11) **EP 4 456 209 A1**
(43) Veröffentlichungstag der Anmeldung: **30.10.2024**
(21) Anmeldenummer: 24170537.5
(22) Anmeldetag: 16.04.2024
(51) Int. Cl.: H01M 8/0202, H01M 8/0206, H01M 8/0258, H01M 8/026

(54) **GEPRÄGTE BIPOLARPLATTE**

(30) Priorität: 24.04.2023 DE 102023110334
(71) Anmelder: Oberland Mangold GmbH, 82438 Eschenlohe (DE)
(72) Erfinder: Mangold, Tobias, 82467 Garmisch-Partenkirchen (DE); Mangold, Christian, 82467 Garmisch-Partenkirchen (DE); Knab, Christian, 82467 Garmisch-Partenkirchen (DE)
(74) Vertreter: Weickmann & Weickmann PartmbB

(57) **Zusammenfassung**

Die Erfindung betrifft eine Bipolarplatte (10) mit Hauptflächen (14, 16), einer ersten Mehrzahl von Erhebungen (18) und einer ersten Mehrzahl von Vertiefungen (20), einer zweiten Mehrzahl von Erhebungen und einer zweiten Mehrzahl von Vertiefungen, wobei eine Vertiefung (20) von einer Erhebung überlagert ist, wobei jede Erhebung (18) und jede Vertiefung (20) eine Länge (L), eine Breite (B) und eine Höhe aufweist, wobei die Bipolarplatte (10) einen Fluideinlass (28) und Fluidauslass (30) aufweist, wobei eine Länge (L) wenigstens mancher der Erhebungen (18) größer als deren jeweilige Breite (B) ist, wobei diese Erhebungen (18) eine erste Erhebungsgruppe (32) und eine zweite Erhebungsgruppe (34) umfassen, wobei die erste Erhebungsgruppe (32) näher zu dem Fluideinlass (28) benachbart angeordnet ist als die zweite Erhebungsgruppe (34), wobei eine erste Fluidhauptströmungsrichtung (X) definiert ist, wobei die Längen (L) der Erhebungen (18) der zweiten Erhebungsgruppe (34) relativ zu der ersten Fluidhauptströmungsrichtung (X) einen Winkel von 0° bis 50° aufweisen, und wobei die Längen (L) der Erhebungen (18) der ersten Erhebungsgruppe (32) relativ zu der ersten Fluidhauptströmungsrichtung (X) einen Winkel von 40° bis 90° aufweisen. Ferner betrifft die Erfindung einen Stack, umfassend zwei zueinander gespiegelt ausgebildete Bipolarplatten.

## Beschreibung

Die vorliegende Erfindung betrifft eine Bipolarplatte für den Aufbau eines elektrochemischen Reaktors.

Aus dem Stand der Technik sind Bipolarplatten für elektrochemische Reaktoren bekannt, welche unter Verwendung von Fräsverfahren hergestellt werden, um an den Bipolarplatten Erhebungen auszubilden. Diese Erhebungen sollen die Strömungseigenschaften des an der Bipolarplatte entlang strömenden Fluids verbessern. Jedoch ist das Herstellverfahren für diese Bipolarplatte sehr aufwendig und somit sind derartige Bipolarplatten derzeit oftmals nicht wirtschaftlich genug.

Es ist daher die Aufgabe der vorliegenden Erfindung eine Bipolarplatte bereitzustellen, welche durch einen verbesserten Prozess herstellbar ist und somit im Vergleich zum Stand der Technik insbesondere auch günstiger produzierbar ist.

Diese Aufgabe wird gemäß der vorliegenden Erfindung durch eine Bipolarplatte für den Aufbau eines elektrochemischen Reaktors gelöst, wobei die Bipolarplatte einen plattenartigen Grundkörper umfasst, welcher eine erste Hauptfläche und eine zweite Hauptfläche aufweist, welche sich im Wesentlichen parallel zueinander erstrecken,
wobei an der ersten Hauptfläche des Grundkörpers eine erste Mehrzahl von Erhebungen und eine erste Mehrzahl von Vertiefungen angeordnet sind, wobei an der zweiten Hauptfläche des Grundkörpers eine zweite Mehrzahl von Erhebungen und eine zweite Mehrzahl von Vertiefungen angeordnet sind,
wobei, in einer Normalenrichtung zu der ersten Hauptfläche und/oder der zweiten Hauptfläche betrachtet, eine jeweilige Vertiefung der ersten Mehrzahl von Vertiefungen an der ersten Hauptfläche von einer zugehörigen Erhebung der zweiten Mehrzahl von Erhebungen an der zweiten Hauptfläche zumindest teilweise überlagert ist,
wobei, in einer Normalenrichtung zu der ersten Hauptfläche und/oder der zweiten Hauptfläche betrachtet, eine jeweilige Vertiefung der zweiten Mehrzahl von Vertiefungen an der zweiten Hauptfläche von einer zugehörigen Erhebung der ersten Mehrzahl von Erhebungen an der ersten Hauptfläche zumindest teilweise überlagert ist,
wobei jede Erhebung und jede Vertiefung eine Länge, welche entlang einer Achse gemessen ist, welche zu der ersten Hauptfläche und/oder zu der zweiten Hauptfläche im Wesentlichen parallel ist, eine Breite, welche entlang einer Achse gemessen ist, welche zu der ersten Hauptfläche und/oder zu der zweiten Hauptfläche im Wesentlichen parallel und zu der Längsachse im Wesentlichen orthogonal ist, und eine Höhe aufweist, welche entlang einer Achse gemessen ist, welche zu der ersten Hauptfläche und/oder zu der zweiten Hauptfläche im Wesentlichen normal ist,
wobei die Bipolarplatte einen ersten Fluideinlass, welcher dazu eingerichtet ist, Fluid von einer Außenseite der Bipolarplatte her zu der ersten Hauptfläche zu leiten, einen zweiten Fluideinlass, welcher dazu eingerichtet ist, Fluid von einer Außenseite der Bipolarplatte her zu der zweiten Hauptfläche zu leiten, einen ersten Fluidauslass, welcher dazu eingerichtet ist, Fluid von der ersten Hauptfläche zu einer Außenseite der Bipolarplatte zu leiten, und einen zweiten Fluidauslass aufweist, welcher dazu eingerichtet ist, Fluid von der zweiten Hauptfläche zu einer Außenseite der Bipolarplatte zu leiten,
wobei eine Länge wenigstens mancher der Erhebungen größer als deren jeweilige Breite ist,
wobei diejenigen Erhebungen, welche eine größere Länge als Breite aufweisen, eine erste Erhebungsgruppe und eine zweite Erhebungsgruppe umfassen,
wobei die erste Erhebungsgruppe näher zu dem Fluideinlass benachbart angeordnet ist als die zweite Erhebungsgruppe,
wobei eine erste Fluidhauptströmungsrichtung durch eine geradlinige von dem ersten Fluideinlass zu dem ersten Fluidauslass definiert ist,
wobei eine zweite Fluidhauptströmungsrichtung durch eine geradlinige von dem zweiten Fluideinlass zu dem zweiten Fluidauslass definiert ist,
wobei die Längen der Erhebungen der zweiten Erhebungsgruppe relativ zu der ersten und/oder zweiten Fluidhauptströmungsrichtung einen Winkel von 0° bis 50°, insbesondere von 0° bis 45°, insbesondere von 0° bis 40°, vorteilhafterweise von 0° bis 30°, aufweisen, und
wobei die Längen der Erhebungen der ersten Erhebungsgruppe relativ zu der ersten und/oder zweiten Fluidhauptströmungsrichtung einen Winkel von 40° bis 90°, insbesondere von 45° bis 90°, insbesondere von 50° bis 90°, vorteilhafterweise von 60° bis 90°, aufweisen.

Durch eine derartige konstruktive Gestaltung der Bipolarplatte kann zum einen ein spanender Prozess vermieden werden und die Bipolarplatte kann größtenteils oder sogar vollständig mittels eines Umformverfahrens hergestellt werden. Zum anderen kann durch die erfindungsgemäße Anordnung der Erhebungen erreicht werden, dass sich das auf eine jeweilige Hauptfläche des Grundkörpers eingeleitete Fluid in einer strömungsoptimierten Weise über die Hauptfläche des Grundkörpers, zum Beispiel im Wesentlichen gleichmäßig, verteilt.

Ferner kann die Herstellung der Bipolarplatte durch einen solchen Umformprozess zu Materialeinsparungen im Gegensatz zu spanenden oder additiven Fertigungsprozessen führen. Somit können wiederum die Herstellkosten reduziert werden.

Insbesondere bedeutet der Winkel 0° eine im Wesentlichen parallele Ausrichtung der Längen der Erhebungen in Bezug auf die erste und/oder die zweite Fluidhauptströmungsrichtung und der Winkel 90° eine im Wesentlichen orthogonale Ausrichtung der Längen der Erhebungen in Bezug auf die erste und/oder die zweite Fluidhauptströmungsrichtung. Auch sei darauf hingewiesen, dass die Winkelangaben im Rahmen der vorliegenden Erfindung als Betragswerte zu verstehen sind. Das heißt, ein Winkel von beispielsweise 45° kann sowohl einen Winkel von +45° als auch einen Winkel von -45° beschreiben. Somit können Erhebungen, welche beidseits und relativ zu der jeweiligen Fluidhauptströmungsrichtung analog und gespiegelt ausgebildet sind, unter das gleiche Merkmal in Bezug auf einen entsprechenden Winkel fallen, obwohl deren Vorzeichen unterschiedlich sind.

Ein weiterer Vorteil der vorliegenden Erfindung liegt darin, dass über die erfindungsgemäße geometrische Gestaltung der Bipolarplatte Totzonen, das heißt zum Beispiel Bereiche mit einer übersättigten Elektrolytlösung und/oder einer Ansammlung an produziertem Gas, reduziert oder sogar vollständig vermieden werden können. Diese Reduzierung/Vermeidung von Totzonen kann insbesondere dadurch erzielt werden, dass dem entlang der Bipolarplatte strömenden Fluid aufgrund der Anordnung der Erhebungen Strömungseigenschaften mit Vektoranteilen sowohl in X-Richtung orthogonal zu der ersten und/oder zweiten Fluidhauptströmungsrichtung als auch in Y-Richtung im Wesentlichen parallel zu der ersten und/oder zweiten Fluidhauptströmungsrichtung.

Die Bipolarplatte kann radial außen von einem Zellrahmen zumindest teilweise umgeben sein, welcher einen Rand für die erste und/oder die zweite Hauptfläche bereitstellt, sodass der Rand in radialer Richtung der Bipolarplatte eine Barriere für das entlang einer jeweiligen Hauptfläche strömende Fluid bildet. Der Zellrahmen selbst kann ebenfalls einen Fluideinlass und/oder einen Fluidauslass aufweisen, sodass der Fluideinlass und/oder der Fluidauslass der Bipolarplatte nicht zwangsläufig als Öffnung oder Ausnehmung der Bipolarplatte ausgebildet sein muss, sondern auch als ein Bereich einer jeweiligen Hauptfläche des Grundkörpers ausgebildet sein kann, welcher dem Fluideinlass und/oder Fluidauslass des Zellrahmens benachbart angeordnet ist.

Insbesondere kann die erste Erhebungsgruppe und/oder die zweite Erhebungsgruppe Erhebungen auf sowohl der ersten Hauptfläche als auch auf der zweiten Hauptfläche umfassen. Dies kann insbesondere, aber nicht darauf begrenzt, dann der Fall sein, wenn sich der Fluideinlass der ersten Hauptfläche des Grundkörpers und der Fluideinlass der zweiten Hauptfläche des Grundkörpers und/oder der Fluidauslass der ersten Hauptfläche des Grundkörpers und der Fluidauslass der zweiten Hauptfläche des Grundkörpers an einer im Wesentlichen gleichen Position.

Es ist darüber hinaus auch denkbar, dass eine Erhebung zu einer Vertiefung direkt benachbart ist oder sogar direkt in diese übergeht. So können eine Erhebung der ersten Hauptfläche und eine Vertiefung der ersten Hauptfläche nicht voneinander beabstandet sein, sondern ineinander übergehen, und/oder eine Erhebung der zweiten Hauptfläche und eine Vertiefung der zweiten Hauptfläche können nicht voneinander beabstandet sein, sondern ineinander übergehen.

Die hierin gegebene Lehre zu der erfindungsgemäßen Bipolarplatte kann in abgewandelter Weise auch für eine einseitig geprägte Bipolarplatte anwendbar sein, welche lediglich an einer ihrer Hauptflächen Erhebungen aufweist. Eine solche einseitig geprägte Bipolarplatte kann insbesondere als Endplatte in einem Stack für den Aufbau eines elektrochemischen Reaktors verwendet werden.

Mit weiterem Bezug zu einem solchen Stack für den Aufbau eines elektrochemischen Reaktors kann die erfindungsgemäße Bipolarplatte die Funktion einer Beabstandung von Bipolarplatte und Elektrode bereitstellen. So kann in einem Bereich zwischen Bipolarplatte und Elektrode eine Fluidtransportebene ausgebildet sein, in welcher Fluid entlang der jeweiligen Hauptfläche des Grundkörpers strömen kann.

Insbesondere kann die Bipolarplatte aus einem elektrisch leitfähigen Material, insbesondere Metall und/oder Kunststoff, hergestellt sein. Dies kann es ermöglichen, dass ein Stromfluss zwischen beiderseits der Bipolarplatte angeordneten Elektroden hergestellt werden kann. Insbesondere in dem Fall, dass die Bipolarplatte vollständig aus einem elektrisch leitfähigen Material hergestellt ist, kann gewährleistet sein, dass der Stromfluss zwischen den Elektroden sowohl in Dickenrichtung der Bipolarplatte als auch über eine jeweilige Hauptfläche verteilt in einer homogenen Weise ausgebildet werden kann. Eine verbesserte Leitfähigkeit kann wiederum durch einen geringeren Energieverbrauch zu einer effizienteren Verwendung der erfindungsgemäßen Bipolarplatte beziehungsweise eines zugehörigen elektrochemischen Reaktors führen.

Vorteilhafterweise kann die Bipolarplatte monolithisch ausgebildet sein. Da monolithische Bipolarplatten aus einem einzigen Stück Material gefertigt werden, können sie einfacher hergestellt werden als solche, welche aus mehreren Teilen bestehen. Auch kann eine monolithische Bipolarplatte in einer einfacheren Weise in einem zugehörigen Stack montierbar sein. Dies kann zu niedrigeren Herstell- und Montagekosten führen. Darüber hinaus können durch eine monolithische Ausbildung der Bipolarplatte auch elektrische Übergangswiderstände von einer jeweiligen Erhebung in die Hauptfläche im Vergleich zu Erhebungen verringert werden, welche unter Verwendung eines Fügeverfahrens mit der Hauptfläche verbunden worden sind.

Ferner kann die Bipolarplatte im Bereich der ersten Hauptfläche und der zweiten Hauptfläche durchbrechungsfrei ausgebildet sein. Hierdurch kann eine Fluidvermischung von sich an der ersten Hauptfläche befindlichem Fluid und sich an der zweiten Hauptfläche befindlichem Fluid verhindert werden, wodurch die Effizienz und/oder Leistung und/oder Lebensdauer des elektrochemischen Reaktors beeinträchtigt werden kann.

Insbesondere kann die erste Erhebungsgruppe eine größere Anzahl an Erhebungen umfassen als die zweite Erhebungsgruppe. Die erste Erhebungsgruppe kann der gleichmäßigen Verteilung des Fluids entlang der Hauptfläche, insbesondere in einer im Wesentlichen orthogonalen Richtung zu der ersten Fluidhauptströmungsrichtung, dienen. Dabei kann der Effekt der Verteilung des Fluids entlang der Hauptfläche durch eine größere Anzahl an Erhebungen der ersten Erhebungsgruppe gesteigert werden. Die zweite Erhebungsgruppe kann einer Ausrichtung der Fluidströmungsrichtung in Richtung des Fluidauslasses dienen. Im Betrieb eines elektrochemischen Reaktors bildet sich an einer der Hauptflächen Wasserstoffgas. Um zu vermeiden, dass sich Wasserstoffgas an der zweiten Erhebungsgruppe stauen kann und somit ein gleichmäßiger Abtransport des Wasserstoffgases über den Fluidauslass behindert werden kann, kann es vorteilhaft sein, dass die zweite Erhebungsgruppe eine geringe Anzahl von Erhebungen aufweist als die erste Erhebungsgruppe. Dies kann insbesondere gelten, da üblicherweise eine Wasserstoffgaskonzentration zum Fluidauslass hin ansteigt. Natürlich kann das voranstehend Beschriebene ebenso für eine Sauerstoffseite eines elektrochemischen Reaktors zutreffend sein.

Vorteilhafterweise kann die wenigstens eine Erhebung von einer Sicke zumindest teilweise umgeben sein. Mit dem Ausdruck "Sicke" soll hier insbesondere eine Vertiefung beschrieben werden, welche eine jeweilige Erhebung zumindest teilweise umgibt und vorteilhafterweise direkt an die Erhebung angrenzend angeordnet ist. Die Vertiefung der Sicke kann sich somit in einer zu der Erhebung entgegengesetzten Richtung in die jeweilige Hauptfläche hinein erstrecken. Eine solche Sicke kann es ermöglichen, dass eine zugehörige Erhebung relativ zu der jeweiligen Hauptfläche in einem vorbestimmten Ausmaß verlagerbar ist, insbesondere entlang einer zu der jeweiligen Hauptfläche orthogonalen Richtung. Durch diese vorbestimmte Flexibilität der Erhebung relativ zu der Hauptfläche können auf die Erhebung einwirkende Kräfte in einer Verlagerung der Erhebung resultieren. So können beispielsweise Fertigungstoleranzen ausgeglichen werden, aufgrund welcher nicht alle Erhebungen relativ zu einer Hauptfläche eine exakt gleiche Höhe aufweisen. Durch diesen Ausgleich beziehungsweise das Zurückversetzen der weiter nach außen vorstehenden Erhebungen kann wiederum vermieden werden, dass eine an den Erhebungen angeordnete Elektrode stark punktuell belastet und hierdurch gegebenenfalls beschädigt werden kann.

In möglichen Ausführungsformen der vorliegenden Erfindung kann die Bipolarplatte eine Plattenstärke von 0,05 mm bis 5 mm, insbesondere von 0,1 mm bis 2 mm, vorteilhafterweise von 0,5 mm bis 1,5 mm, aufweisen. Bipolarplatten mit einer geringen Plattenstärke führen zu einem insgesamt leichteren und kompakteren elektrochemischen Reaktor. Dies ist besonders wichtig für Anwendungen, bei denen Gewicht und Größe eine Rolle spielen. Darüber hinaus können Bipolarplatten mit einer geringen Plattenstärke durch die Verwendung von weniger Material und durch einfachere Herstellungsprozesse zu niedrigeren Herstellkosten führen.

Ferner kann die Bipolarplatte unter Verwendung eines Umformungsprozesses, insbesondere durch Prägen und/oder Tiefziehen und/oder Hydroforming, hergestellt sein. Die Verwendung eines Umformungsprozesses kann zu einer Material- und Zeiteinsparung im Gegensatz zu spanenden Fertigungsverfahren führen und somit zu niedrigeren Herstellkosten.

Zum Beispiel kann die Bipolarplatte eine kreisförmige oder ovale oder polygone, insbesondere rechteckige, Außenkontur aufweisen. Die Außenkontur der erfindungsgemäßen Bipolarplatte kann insbesondere an Anforderungen angepasst werden, welche sich aus deren Einsatz in einem Stack ergeben.

Insbesondere kann die erste Hauptfläche der Bipolarplatte eine Anodenseite des elektrochemischen Reaktors bilden und die zweite Hauptfläche der Bipolarplatte kann eine Kathodenseite des elektrochemischen Reaktors bilden.

Die vorliegende Erfindung kann sich ferner auf eine gefügte Funktionsbaugruppe beziehen, welche eine erfindungsgemäße Bipolarplatte sowie zwei Elektroden umfasst, wobei an jeder Hauptseite der Bipolarplatte eine Elektrode angeordnet ist. Die Bipolarplatte und die jeweilige Elektrode können dabei im Bereich wenigstens eines ausgewählten Kontaktpunkts, insbesondere im Bereich aller Kontaktpunkte, fest miteinander gefügt, wie beispielsweise verschweißt, sein.

In Weiterbildung der Erfindung ist es darüber hinaus denkbar, dass wenigstens eine Erhebung der ersten Mehrzahl von Erhebungen an der ersten Hauptfläche eine Höhe aufweist, welche von einer Höhe wenigsten einer anderen Erhebung der ersten Mehrzahl von Erhebungen an der ersten Hauptfläche verschieden ist, und/oder
dass wenigstens eine Erhebung der zweiten Mehrzahl von Erhebungen an der zweiten Hauptfläche eine Höhe aufweist, welche von einer Höhe wenigsten einer anderen Erhebung der zweiten Mehrzahl von Erhebungen an der zweiten Hauptfläche verschieden ist. So kann beispielsweise erreicht werden, dass nur eine begrenzte Anzahl an Erhebungen, insbesondere diejenigen, welche eine größere Höhe aufweisen, mit einer zugehörigen Elektrode in Kontakt stehen. So können die übrigen Erhebungen war zu der Strömungsoptimierung an der Bipolarplatte beziehungsweise an der jeweiligen Hauptfläche der Bipolarplatte beitragen, aber der zu diesen (kleineren) Erhebungen benachbarte Bereich der Elektrode kann für einen Kontakt mit Elektrolyt und somit zur Gaserzeugung verwendbar sein. Es kann denkbar sein, dass Erhebungen der zweiten Erhebungsgruppe nicht die gleiche Höhe wie Erhebungen der ersten Erhebungsgruppe aufweisen.

Ferner kann wenigstens eine Erhebung der ersten Mehrzahl von Erhebungen an der ersten Hauptfläche eine Höhe aufweisen, welche von einer Höhe wenigsten einer Erhebung der zweiten Mehrzahl von Erhebungen an der zweiten Hauptfläche verschieden ist, wobei insbesondere die Höhe der wenigstens einen Erhebung der ersten Mehrzahl von Erhebungen an der ersten Hauptfläche um einen Faktor von 0,5 bis 2,0, vorteilhafterweise von 1,1 bis 1,5, verschieden, insbesondere höher, sein kann als die Höhe der wenigstens einen Erhebung der zweiten Mehrzahl von Erhebungen an der zweiten Hauptfläche. Wie bereits weiter oben beschrieben, kann durch eine geeignete Anordnung von unterschiedlich hohen Erhebungen an einer jeweiligen Hauptfläche eine vorbestimmte und gewünschte Eigenschaft für den Transport von an dieser Hauptfläche strömendem Fluid, beispielsweise einem Flüssigkeits-Gas-Gemisch, erzielt werden.

Gemäß einem weiteren Aspekt der vorliegenden Erfindung wird die eingangs beschriebene Aufgabe durch einen Stack für den Aufbau eines elektrochemischen Reaktors gelöst, umfassend wenigstens eine erste und wenigstens eine zweite Bipolarplatte,
wobei die erste und die zweite Bipolarplatte jeweils einen plattenartigen Grundkörper umfassen, welcher eine erste Hauptfläche und eine zweite Hauptfläche aufweist, welche sich im Wesentlichen parallel zueinander erstrecken,
wobei an der ersten Hauptfläche des Grundkörpers eine erste Mehrzahl von Erhebungen und eine erste Mehrzahl von Vertiefungen angeordnet sind, wobei an der zweiten Hauptfläche des Grundkörpers eine zweite Mehrzahl von Erhebungen und eine zweite Mehrzahl von Vertiefungen angeordnet sind,
wobei, in einer Normalenrichtung zu der ersten Hauptfläche und/oder der zweiten Hauptfläche betrachtet, eine jeweilige Vertiefung der ersten Mehrzahl von Vertiefungen an der ersten Hauptfläche von einer zugehörigen Erhebung der zweiten Mehrzahl von Erhebungen an der zweiten Hauptfläche zumindest teilweise überlagert ist,
wobei, in einer Normalenrichtung zu der ersten Hauptfläche und/oder der zweiten Hauptfläche betrachtet, eine jeweilige Vertiefung der zweiten Mehrzahl von Vertiefungen an der zweiten Hauptfläche von einer zugehörigen Erhebung der ersten Mehrzahl von Erhebungen an der ersten Hauptfläche zumindest teilweise überlagert ist,
wobei die erste Bipolarplatte in Bezug auf eine Spiegelebene, welche sich im Wesentlichen parallel zu der ersten Hauptfläche und/oder der zweiten Hauptfläche erstreckt, gespiegelt zu der zweiten Bipolarplatte ausgebildet ist.

Es sei bereits an dieser Stelle darauf hingewiesen, dass sämtliche mit Bezug auf die erfindungsgemäße Bipolarplatte beschriebene Merkmale, Effekte und Vorteile auch auf einen erfindungsgemäßen Stack anwendbar sein können und umgekehrt.

Dabei kann eine erste Bipolarplatte relativ zu einer zweiten Bipolarplatte derart in dem Stack angeordnet sein, dass wenigstens eine Erhebung, insbesondere alle Erhebungen, der ersten Bipolarplatte einer jeweiligen Erhebung der zweiten Bipolarplatte, in einer Normalenrichtung zu der ersten Hauptfläche und/oder der zweiten Hauptfläche der ersten Bipolarplatte betrachtet, gegenüberliegt. Gegenüberliegend kann hier ferner bedeuten, dass die wenigstens eine Erhebung, insbesondere alle Erhebungen, der ersten Bipolarplatte und eine jeweilige Erhebung der zweiten Bipolarplatte, in einer Normalenrichtung zu der ersten Hauptfläche und/oder der zweiten Hauptfläche der ersten Bipolarplatte betrachtet, aufeinander zu weisen. Durch die spiegelsymmetrische Anordnung der ersten und zweiten Bipolarplatte in einem erfindungsgemäßen Stack eines elektrochemischen Reaktors derart, dass die Erhebungen gegenseitig aufeinander zu weisen, kann erreicht werden, dass eine Belastung, welche auf eine der Bipolarplatten einwirkt, gleichmäßig über eine zwischen den beiden Bipolarplatten angeordnete Elektroden-Separator-Einheit in die jeweils andere Bipolarplatte übertragen werden kann. Auf diese Weise kann eine Beschädigung der Elektroden-Separator-Einheit verhindert werden. Darüber hinaus kann dadurch, dass die erste bzw. zweite Bipolarplatte mit Erhebungen versehen ist, eine Elektroden-Separator-Einheit verwendbar sein, in welcher die Elektroden selbst frei von Erhebungen sind. Somit kann eine verwendete Elektrode über ihre gesamte Fläche hinweg zur Produktion eines jeweiligen Gases einsetzbar sein.

Die Bipolarplatte kann hierbei beidseitig mit Elektrolyt umströmt sein. Insbesondere kann hier der Einsatz der Bipolarplatte mit einem Elektrolyt denkbar sein, welcher einen pH-Wert im Bereich von 7 bis 14, insbesondere im Bereich von 12 bis 14, aufweist.

Vorteilhafterweise können die erste Bipolarplatte und die zweite Bipolarplatte gemäß der erfindungsgemäßen Bipolarplatte ausgebildet sein. Somit können die erste Bipolarplatte und die zweite Bipolarplatte auch die strömungsoptimierte Anordnung der erfindungsgemäßen Bipolarplatte aufweisen, auf deren obige Beschreibung hiermit explizit verwiesen ist.

Im Folgenden wird die vorliegende Erfindung in größerem Detail anhand von zwei Ausführungsbeispielen mit Bezug auf die begleitenden Zeichnungen erläutert werden. Es stellt dar:
- Figur 1: eine Aufsicht einer erfindungsgemäßen Bipolarplatte;
- Figur 2: eine Seitenquerschnittansicht eines Abschnitts der Bipolarplatte aus Figur 1 entlang der in Figur 1 darstellten Linie A-A;
- Figur 3: eine perspektivische Ansicht einer zweiten Ausführungsform einer erfindungsgemäßen Bipolarplatte; und
- Figur 4: eine Seitenquerschnittansicht eines Abschnitts eines erfindungsgemäßen Stacks aus einer ersten und einer zweiten Bipolarplatten.

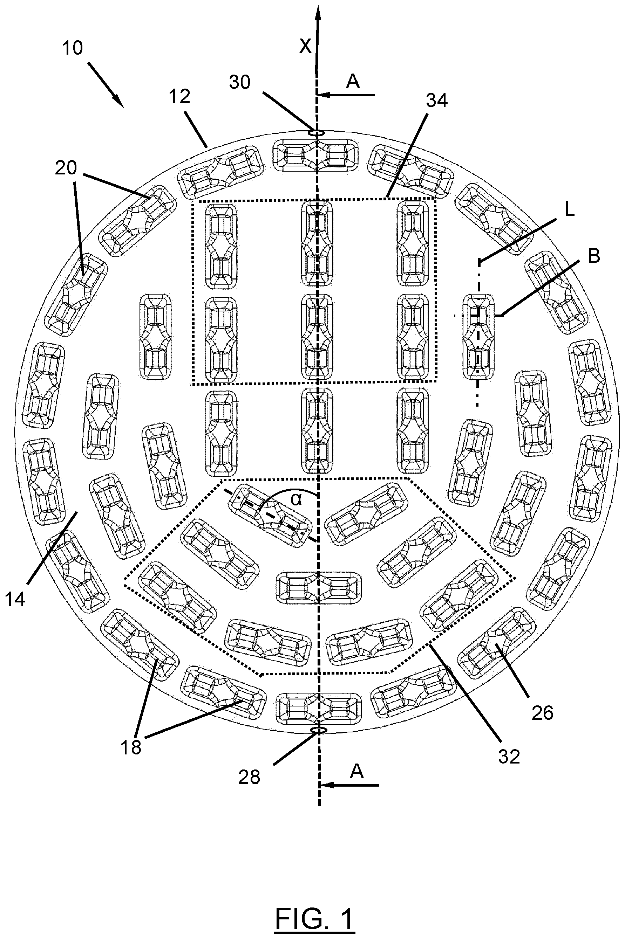

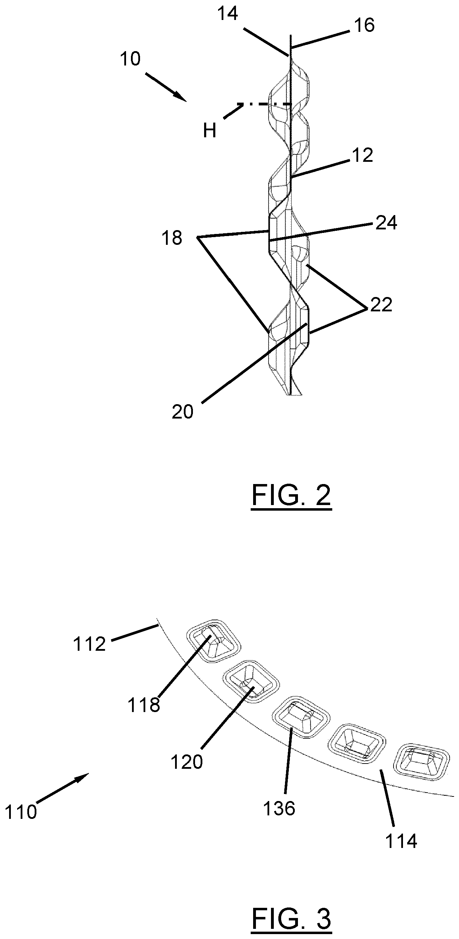

In Figur 1 ist die erfindungsgemäße Bipolarplatte allgemein mit dem Bezugszeichen 10 bezeichnet. Die Bipolarplatte umfasst hier einen runden, plattenförmigen Grundkörper 12, welcher eine erste Hauptfläche 14 und eine zweite Hauptfläche 16 (s. Figur 2) aufweist. Die erste Hauptfläche 14 und die zweite Hauptfläche 16 erstrecken sich hier parallel zueinander.

An der ersten Hauptfläche 14 des Grundkörpers 10 ist eine erste Mehrzahl von Erhebungen 18 und eine erste Mehrzahl von Vertiefungen 20 angeordnet. An der zweiten Hauptfläche 16 des Grundkörpers 10 ist eine zweite Mehrzahl von Erhebungen 22 und eine zweite Mehrzahl von Vertiefungen 24 angeordnet (s. Figur 2). In der hier, insbesondere mit Bezug auf Figur 2, gezeigten Ausführungsform definiert eine Erhebung 18 an ihrer inneren Seite eine Vertiefung 24, welche an der zweiten Hauptfläche 16 angeordnet ist. In analoger Weise definiert eine Erhebung 22 an ihrer inneren Seite eine Vertiefung 20, welche an der zweiten Hauptfläche 16 angeordnet ist. Dies kommt daher, da die hier gezeigte Bipolarplatte 10 unter Verwendung eines Prägeverfahrens hergestellt ist, sodass ein Eindrücken von Material in die erste Hauptfläche 14 hinein, um eine Vertiefung 20 zu erzeugen, zugleich eine Erhebung 22 an der zweiten Hauptfläche 16 erzeugt.

In Zusammenschau der Figuren 1 und 2 ist gezeigt, dass manche (in der gezeigten Ausführungsform alle) Erhebungen und Vertiefungen eine Länge L, eine Breite B und eine Höhe H aufweisen.

In der speziellen Ausführungsform, welche in den Figuren 1, 2 und 4 gezeigt ist, sind jeweils eine Vertiefung 20 und eine Erhebung 18 an der ersten Hauptfläche 14 beziehungsweise jeweils eine Erhebung 22 und eine Vertiefung 24 an der zweiten Hauptfläche 16 direkt aneinander angrenzend als Pärchen 26 ausgebildet.

Die Bipolarplatte 10 umfasst des Weiteren einen Fluideinlass 28 und einen Fluidauslass 30, welcher hier in Bezug auf den Grundkörper 12 dem Fluideinlass 24 diametral gegenüberliegend positioniert ist. Der Fluideinlass 28 und der Fluidauslass 30 sind hier durch einen ovalen Ring angedeutet.

Dabei kann der Fluideinlass 28 und der Fluidauslass 30 auch ein Bereich der jeweiligen Hauptfläche 14, 16 sein, in welchen eine Fluiddurchführung durch einen nicht gezeigten Zellrahmens mündet, welcher den Grundkörper 12 der Bipolarplatte 10 umgibt. Insbesondere kann die erste Hauptfläche 14 einen Fluideinlass 28 und einen Fluidauslass 30 aufweisen und die zweite Hauptfläche 16 kann einen davon gesonderten Fluideinlass (nicht gezeigt) und einen davon gesonderten Fluidauslass (nicht gezeigt) aufweisen.

Eine Verbindungslinie von dem Fluideinlass 28 zu dem Fluidauslass 30 bildet eine Fluidhauptströmungsrichtung X, welche in Figur 1 mit der Schnittlinie A-A zusammenfällt und daher nur durch den an die Schnittlinie A-A angefügten Pfeil X angedeutet ist. Für den Fall, dass an der in Figur 1 abgewandten Hauptfläche 16 ein zweiter Fluideinlass und ein zweiter Fluidauslass ausgebildet sind, kann die Fluidhauptströmungsrichtung X als erste Fluidhauptströmungsrichtung X angesehen werden und die Fluidhauptströmungsrichtung der Verbindung des zweiten Fluideinlasses und des zweiten Fluidauslasses an der zweiten Hauptfläche 16 kann als zweite Fluidhauptströmungsrichtung angesehen werden.

In Figur 1 sind manche der Erhebungen 18 an der ersten Hauptfläche 14 zu einer ersten Erhebungsgruppe 32 und manche der Erhebungen 18 an der ersten Hauptfläche 14 zu einer zweiten Erhebungsgruppe 34 gruppiert, wobei die erste Erhebungsgruppe 32 näher an dem Fluideinlass 24 angeordnet ist als die zweite Erhebungsgruppe 34.

Dabei ist zu erkennen, dass die Längen der Erhebungen 18 der ersten Erhebungsgruppe 32 zu der Fluidhauptströmungsrichtung X derart gewinkelt angeordnet sind, dass ein dazwischen gebildeter Winkel α 45° oder mehr beträgt, wohingegen die Längen der Erhebungen 18 der zweiten Erhebungsgruppe 34 zu der Fluidhauptströmungsrichtung X derart gewinkelt angeordnet sind, dass ein dazwischen gebildeter Winkel α weniger als 45° (hier sogar 0°) beträgt. Die erste Erhebungsgruppe 32 kann somit der Verteilung des Fluids auf der jeweiligen Hauptfläche 14 dienen. Die zweite Erhebungsgruppe 34 kann dem gezielten Ausrichten und Abführen des Fluids zum Fluidauslass 26 hin dienen.

In Figur 3 ist eine zweite Ausführungsform einer erfindungsgemäßen Bipolarplatte in einer perspektivischen Ansicht zu sehen, welche mit dem Bezugszeichen 110 bezeichnet ist. Bei der zweiten Ausführungsform der Bipolarplatte 110 werden zu der ersten Ausführungsform der Bipolarplatte 10 analoge Merkmale mit analogen Bezugszeichen bezeichnet werden, jedoch erhöht um 100. Im Folgenden soll daher maßgeblich auf die Unterschiede der zweiten Ausführungsform der Bipolarplatte 110 zu der ersten Ausführungsform der Bipolarplatte 10 eingegangen werden.

In der in Figur 3 dargestellten Ausführungsform der Bipolarplatte 110 sind zu den Erhebungen 18, 22 und Vertiefungen 20, 24 analoge Erhebungen 118 und Vertiefungen 120 an der ersten Hauptfläche 114 ausgebildet. Jedoch sind die Erhebungen 118 und Vertiefungen 120 an der ersten Hauptfläche 114 voneinander beabstandet, das heißt, sie sind nicht als Pärchen 26 ausgebildet. Wie bereits mit Bezug auf die Bipolarplatte 10 beschrieben, ergeben sich auch hier durch die Vertiefungen 120 Erhebungen an der zweiten Hauptfläche, welche der ersten Hauptfläche 114 entgegengesetzt ist und in Figur 3 abgewandt ist. Ebenso bilden die Erhebungen 118 an ihrer inneren Seite Vertiefungen an der zweiten Hauptfläche aus.

Im Unterschied zu der ersten Ausführungsform der Bipolarplatte 10 weist die zweite Ausführungsform der Bipolarplatte 110 Sicken 136 auf, welche jeweilige Erhebungen 118 (im vorliegenden Fall vollständig) umgeben. Das heißt, von der Hauptfläche 114 auf die jeweilige Erhebung 118 zu betrachtet, ist eine durch die Sicke ausgebildete Vertiefung der Erhebung vorgelagert. Hierdurch kann eine gewisse Verlagerbarkeit der Erhebung 118 in Höhenrichtung H erreicht werden.

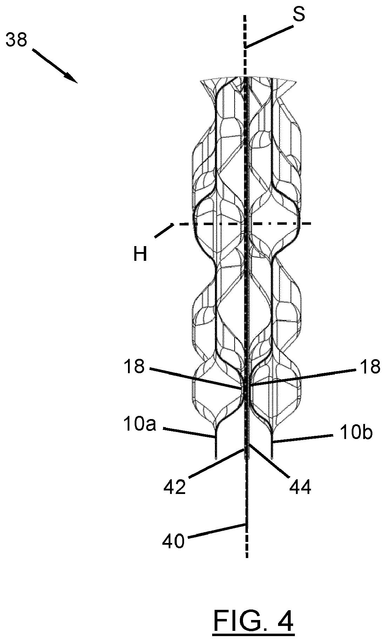

Figur 4 stellt eine Seitenquerschnittsansicht eines Abschnitts eines erfindungsgemäßen Stacks 38 dar. Der Stack 38 umfasst eine erste Bipolarplatte 10a und eine zweite Bipolarplatte 10b, welche beide gemäß der erfindungsgemäßen Bipolarplatte 10, jedoch zueinander gespiegelt, ausgebildet sind. Die erste Bipolarplatte 10a ist hierbei relativ zu der zweiten Bipolarplatte 10b derart in dem Stack 38 angeordnet, dass jede Erhebung 18 der ersten Bipolarplatte 10a einer Erhebung 18 der zweiten Bipolarplatte 10b gegenüberliegt, betrachtet in Höhenrichtung H einer jeweiligen Erhebung 18 beziehungsweise in einer normalen Richtung zu den Hauptflächen 14, 16 (vgl. Figur 2) der ersten Bipolarplatte 10a und/oder der zweiten Bipolarplatte 10b. Durch diese Anordnung der ersten Bipolarplatte 10a und der zweiten Bipolarplatte 10b ergibt sich eine Spiegelebene S, welche mittig zwischen den beiden Bipolarplatten 10a und 10b angeordnet ist.

Ferner sind in Figur 4 ein Separator 40 sowie eine erste Elektrode 42 und eine zweite Elektrode 44 dargestellt. Dabei ist der Separator 40 mittig zwischen den beiden Bipolarplatten 10a und 10b (auf der Spiegelebene S) angeordnet. An einer Seite des Separators 40 ist die erste Elektrode 42 und an der anderen Seite des Separators 40 ist die zweite Elektrode 44 angeordnet, sodass sich eine Elektroden-Separator-Einheit ergibt.

Der Vollständigkeit halber sei explizit erwähnt, dass der erfindungsgemäße Stack 38 auch unter Verwendung von zwei zueinander gespiegelten Bipolarplatten 110 ausgebildet werden kann.

## Patentansprüche

1. Bipolarplatte (10, 110) für den Aufbau eines elektrochemischen Reaktors,
wobei die Bipolarplatte (10, 110) einen plattenartigen Grundkörper (12) umfasst, welcher eine erste Hauptfläche (14, 114) und eine zweite Hauptfläche (16) aufweist, welche sich im Wesentlichen parallel zueinander erstrecken,
wobei an der ersten Hauptfläche (14, 114) des Grundkörpers (12) eine erste Mehrzahl von Erhebungen (18, 118) und eine erste Mehrzahl von Vertiefungen (20, 120) angeordnet sind,
wobei an der zweiten Hauptfläche (16) des Grundkörpers (12) eine zweite Mehrzahl von Erhebungen (22) und eine zweite Mehrzahl von Vertiefungen (24) angeordnet sind,
wobei, in einer Normalenrichtung (H) zu der ersten Hauptfläche (14, 114) und/oder der zweiten Hauptfläche (16) betrachtet, eine jeweilige Vertiefung (20, 120) der ersten Mehrzahl von Vertiefungen (20, 120) an der ersten Hauptfläche (14, 114) von einer zugehörigen Erhebung (22) der zweiten Mehrzahl von Erhebungen (22) an der zweiten Hauptfläche (16) zumindest teilweise überlagert ist,
wobei, in einer Normalenrichtung (H) zu der ersten Hauptfläche (14, 114) und/oder der zweiten Hauptfläche (16) betrachtet, eine jeweilige Vertiefung (24) der zweiten Mehrzahl von Vertiefungen (24) an der zweiten Hauptfläche (16) von einer zugehörigen Erhebung (18) der ersten Mehrzahl von Erhebungen (18) an der ersten Hauptfläche (14, 114) zumindest teilweise überlagert ist,
wobei jede Erhebung (18, 118; 22) und jede Vertiefung (20, 120; 24) eine Länge (L), welche entlang einer Achse gemessen ist, welche zu der ersten Hauptfläche (14, 114) und/oder zu der zweiten Hauptfläche (16) im Wesentlichen parallel ist, eine Breite (B), welche entlang einer Achse gemessen ist, welche zu der ersten Hauptfläche (14, 114) und/oder zu der zweiten Hauptfläche (16) im Wesentlichen parallel und zu der Längsachse (L) im Wesentlichen orthogonal ist, und eine Höhe (H) aufweist, welche entlang einer Achse gemessen ist, welche zu der ersten Hauptfläche (14, 114) und/oder zu der zweiten Hauptfläche (16) im Wesentlichen normal ist,
wobei die Bipolarplatte (10, 110) einen ersten Fluideinlass (28), welcher dazu eingerichtet ist, Fluid von einer Außenseite der Bipolarplatte (10, 110) her zu der ersten Hauptfläche (14, 114) zu leiten, einen zweiten Fluideinlass, welcher dazu eingerichtet ist, Fluid von einer Außenseite der Bipolarplatte (10, 110) her zu der zweiten Hauptfläche (16) zu leiten, einen ersten Fluidauslass (30), welcher dazu eingerichtet ist, Fluid von der ersten Hauptfläche (14, 114) zu einer Außenseite der Bipolarplatte (10, 110) zu leiten, und einen zweiten Fluidauslass aufweist, welcher dazu eingerichtet ist, Fluid von der zweiten Hauptfläche (16) zu einer Außenseite der Bipolarplatte (10, 110) zu leiten,
wobei eine Länge (L) wenigstens mancher der Erhebungen (18, 118; 22) größer als deren jeweilige Breite (B) ist,
wobei diejenigen Erhebungen (18, 118; 22), welche eine größere Länge (L) als Breite (B) aufweisen, eine erste Erhebungsgruppe (32) und eine zweite Erhebungsgruppe (34) umfassen,
wobei die erste Erhebungsgruppe (32) näher zu dem Fluideinlass (28) benachbart angeordnet ist als die zweite Erhebungsgruppe (34),
wobei eine erste Fluidhauptströmungsrichtung (X) durch eine geradlinige von dem ersten Fluideinlass (28) zu dem ersten Fluidauslass (30) definiert ist,
wobei eine zweite Fluidhauptströmungsrichtung durch eine geradlinige von dem zweiten Fluideinlass zu dem zweiten Fluidauslass definiert ist,
wobei die Längen (L) der Erhebungen (18, 118; 22) der zweiten Erhebungsgruppe (34) relativ zu der ersten (X) und/oder zweiten Fluidhauptströmungsrichtung einen Winkel (α) von 0° bis 50°, insbesondere von 0° bis 45°, insbesondere von 0° bis 40°, vorteilhafterweise von 0° bis 30°, aufweisen, und
wobei die Längen (L) der Erhebungen (18, 118; 22) der ersten Erhebungsgruppe (32) relativ zu der ersten (X) und/oder zweiten Fluidhauptströmungsrichtung einen Winkel (α) von 40° bis 90°, insbesondere von 45° bis 90°, insbesondere von 50° bis 90°, vorteilhafterweise von 60° bis 90°, aufweisen.

2. Bipolarplatte (10, 110) nach dem vorhergehenden Anspruch,
**dadurch gekennzeichnet, dass** die Bipolarplatte (10, 110) aus einem elektrisch leitfähigen Material, insbesondere Metall und/oder Kunststoff, hergestellt ist.

3. Bipolarplatte (10, 110) nach einem der vorhergehenden Ansprüche,
**dadurch gekennzeichnet, dass** die Bipolarplatte (10, 110) monolithisch ausgebildet ist.

4. Bipolarplatte (10, 110) nach einem der vorhergehenden Ansprüche,
**dadurch gekennzeichnet, dass** die Bipolarplatte (10, 110) im Bereich der ersten Hauptfläche (14, 114) und der zweiten Hauptfläche (16) durchbrechungsfrei ausgebildet ist.

5. Bipolarplatte (10, 110) nach einem der vorhergehenden Ansprüche,
**dadurch gekennzeichnet, dass** die erste Erhebungsgruppe (32) eine größere Anzahl an Erhebungen (18, 118; 22) umfasst als die zweite Erhebungsgruppe (34).

6. Bipolarplatte (110) nach einem der vorhergehenden Ansprüche,
**dadurch gekennzeichnet, dass** die wenigstens eine Erhebung (18, 118; 22) von einer Sicke (136) zumindest teilweise umgeben ist.

7. Bipolarplatte (10, 110) nach einem der vorhergehenden Ansprüche,
**dadurch gekennzeichnet, dass** die Bipolarplatte (10, 110) eine Plattenstärke von 0,05 mm bis 5 mm, insbesondere von 0,1 mm bis 2 mm, vorteilhafterweise von 0,5 mm bis 1,5 mm, aufweist.

8. Bipolarplatte (10, 110) nach einem der vorhergehenden Ansprüche,
**dadurch gekennzeichnet, dass** die Bipolarplatte (10, 110) unter Verwendung eines Umformungsprozesses, insbesondere durch Prägen und/oder Tiefziehen und/oder Hydroforming, hergestellt ist.

9. Bipolarplatte (10, 110) nach einem der vorhergehenden Ansprüche,
**dadurch gekennzeichnet, dass** die Bipolarplatte (10, 110) eine kreisförmige oder ovale oder polygone, insbesondere rechteckige, Außenkontur aufweist.

10. Bipolarplatte (10, 110) nach einem der vorhergehenden Ansprüche,
**dadurch gekennzeichnet, dass** die erste Hauptfläche (14, 114) der Bipolarplatte (10, 110) eine Anodenseite des elektrochemischen Reaktors bildet und die zweite Hauptfläche der Bipolarplatte (10, 110) eine Kathodenseite des elektrochemischen Reaktors bildet.

11. Bipolarplatte (10, 110) nach einem der vorhergehenden Ansprüche,
**dadurch gekennzeichnet, dass** wenigstens eine Erhebung (18, 118) der ersten Mehrzahl von Erhebungen (18, 118) an der ersten Hauptfläche (14, 114) eine Höhe (H) aufweist, welche von einer Höhe (H) wenigsten einer anderen Erhebung (18, 118) der ersten Mehrzahl von Erhebungen (18, 118) an der ersten Hauptfläche (14, 114) verschieden ist, und/oder dass wenigstens eine Erhebung (22) der zweiten Mehrzahl von Erhebungen (22) an der zweiten Hauptfläche (16) eine Höhe (H) aufweist, welche von einer Höhe (H) wenigsten einer anderen Erhebung (22) der zweiten Mehrzahl von Erhebungen (22) an der zweiten Hauptfläche (16) verschieden ist.

12. Bipolarplatte (10, 110) nach einem der vorhergehenden Ansprüche,
**dadurch gekennzeichnet, dass** wenigstens eine Erhebung (18, 118) der ersten Mehrzahl von Erhebungen (18, 118) an der ersten Hauptfläche (14, 114) eine Höhe (H) aufweist, welche von einer Höhe (H) wenigsten einer Erhebung (22) der zweiten Mehrzahl von Erhebungen (22) an der zweiten Hauptfläche (16) verschieden ist, wobei insbesondere die Höhe (H) der wenigstens einen Erhebung (18, 118) der ersten Mehrzahl von Erhebungen (18, 118) an der ersten Hauptfläche (14, 114) um einen Faktor von 0,5 bis 2,0, vorteilhafterweise von 1,1 bis 1,5, verschieden, insbesondere höher, ist als die Höhe (H) der wenigstens einen Erhebung (22) der zweiten Mehrzahl von Erhebungen (22) an der zweiten Hauptfläche (16).

13. Stack (38) für den Aufbau eines elektrochemischen Reaktors, umfassend wenigstens eine erste (10a) und wenigstens eine zweite (10b) Bipolarplatte,
wobei die erste (10a) und die zweite (10b) Bipolarplatte jeweils einen plattenartigen Grundkörper (12) umfassen, welcher eine erste Hauptfläche (14, 114) und eine zweite Hauptfläche (16) aufweist, welche sich im Wesentlichen parallel zueinander erstrecken,
wobei an der ersten Hauptfläche (14, 114) des Grundkörpers (12) eine erste Mehrzahl von Erhebungen (18, 118) und eine erste Mehrzahl von Vertiefungen (20, 120) angeordnet sind,
wobei an der zweiten Hauptfläche (16) des Grundkörpers (12) eine zweite Mehrzahl von Erhebungen (22) und eine zweite Mehrzahl von Vertiefungen (24) angeordnet sind,
wobei, in einer Normalenrichtung (H) zu der ersten Hauptfläche (14, 114) und/oder der zweiten Hauptfläche (16) betrachtet, eine jeweilige Vertiefung (20, 120) der ersten Mehrzahl von Vertiefungen (20, 120) an der ersten Hauptfläche (14, 114) von einer zugehörigen Erhebung (22) der zweiten Mehrzahl von Erhebungen (22) an der zweiten Hauptfläche (16) zumindest teilweise überlagert ist,
wobei, in einer Normalenrichtung (H) zu der ersten Hauptfläche (14, 114) und/oder der zweiten Hauptfläche (16) betrachtet, eine jeweilige Vertiefung (24) der zweiten Mehrzahl von Vertiefungen (24) an der zweiten Hauptfläche (16) von einer zugehörigen Erhebung (18, 118) der ersten Mehrzahl von Erhebungen (18, 118) an der ersten Hauptfläche (14, 114) zumindest teilweise überlagert ist,
wobei die erste Bipolarplatte (10a) in Bezug auf eine Spiegelebene (S), welche sich im Wesentlichen parallel zu der ersten Hauptfläche (14, 114) und/oder der zweiten Hauptfläche (16) erstreckt, gespiegelt zu der zweiten Bipolarplatte (10b) ausgebildet ist.

14. Stack (38) nach dem vorhergehenden Anspruch,
**dadurch gekennzeichnet, dass** eine erste Bipolarplatte (10a) relativ zu einer zweiten Bipolarplatte (1 0b) derart in dem Stack (38) angeordnet ist, dass wenigstens eine Erhebung (18, 118; 22), insbesondere alle Erhebungen (18, 118; 22), der ersten Bipolarplatte (10a) einer jeweiligen Erhebung (18, 118; 22) der zweiten Bipolarplatte (10b), in einer Normalenrichtung (H) zu der ersten Hauptfläche (14, 114) und/oder der zweiten Hauptfläche (16) der ersten Bipolarplatte (10a) betrachtet, gegenüberliegt.

15. Stack (38) nach Anspruch 13 oder 14,
**dadurch gekennzeichnet, dass** die erste Bipolarplatte (10a) und die zweite Bipolarplatte (10b) gemäß einem der Ansprüche 1 bis 12 ausgebildet sind.
